Europäisches Patentamt

European Patent Office

Office européen des brevets

(19)

(11) Veröffentlichungsnummer: **0 228 559**

**A1**

(12) # EUROPÄISCHE PATENTANMELDUNG

(21) Anmeldenummer: 86116153.7

(22) Anmeldetag: 21.11.86

(51) Int. Cl.⁴: **G06F 11/14**

(30) Priorität: 17.12.85 CH 5376/85

(43) Veröffentlichungstag der Anmeldung:
15.07.87 Patentblatt 87/29

(84) Benannte Vertragsstaaten:
CH DE GB LI SE

(71) Anmelder: **BBC Aktiengesellschaft Brown,
Boveri & Cie.
Haselstrasse
CH-5401 Baden(CH)**

(72) Erfinder: **Krings, Lothar, Dr.
Ländliweg 6
CH-5400 Baden(CH)**

(54) **Fehlertolerante Mehrrechneranordnung.**

(57) In dieser Anordnung wird bei Entdeckung eines Fehlers in einer Recheneinheit ($P_1$, $P_1'$) die Programmausführung auf dieser Recheneinheit unterbrochen und von einer Ersatzrecheneinheit ($P_2$, $P_2'$) von einem früheren intakten Zustand, einem Recovery-Point, aus wieder aufgenommen. Solche Recovery-Points sind im Programm eigens vorgesehen. Von dem Zustand an den Recovery-Points wird jeweils in einer Datensicherungseinheit ($M_2$, $CL_2$) durch Registrieren von Aenderungen gegenüber dem jeweils vorherigen Zustand eine Sicherungskopie angelegt. Der in der Datensicherungseinheit vorhandene Datenspeicher ($M_2$) weist Paare von Speicherworten auf, wobei in einem der Speicherworte jeweils der Zustand am zuletzt erreichten Recovery-Point gesichert ist und in dem jeweils anderen die aktuellen Aenderungen registriert werden. Auf die Speicherworte wird über Zeiger zugegriffen, die aus zwei, jedem Speicherwortpaar zugeordneten Kontrollbits von einer Steuerlogik ($CL_2$) gebildet werden. Die Verarbeitung der Kontrollbits bzw. der Zeiger ist sehr schnell. Ein Kopieren von Daten innerhalb der Datensicherungseinheit ist nicht erforderlich. Die Ersatzrecheneinheit hat direkten Zugriff auf die gesicherten Daten.

FIG. 1

EP 0 228 559 A1

## Fehlertolerante Mehrrechneranordnung

Die Erfindung betrifft eine fehlertolerante Mehrrechneranordnung gemäss dem Oberbegriff des Patentanspruchs 1.

In einer fehlertoleranten Mehrrechneranordnung müssen transiente oder permanente Hardware-und Softwarefehler erkannt und möglichst schnell behoben werden. Zur Fehlererkennung werden häufig zwei, eine Recheneinheit bildende Prozessoren mit gleichem Programm parallel betrieben und deren Ergebnisse auf Uebereinstimmung überwacht. Sobald ein Fehler auftritt, wird die Programmausführung unterbrochen - (Fail-Stop-Funktion). Um insbesondere bei Prozessrechneranwendungen die Ausführung des Programms auch nach einem Fehler sicherzustellen, wird ein Ersatzprogramm (Backup-Task) auf einer (Hot-Stand-By) Ersatzrecheneinheit aktiviert, der die gleichen I/O-Kanäle zur Verfügung stehen.

Da es sehr aufwendig ist, die Integretät jeder einzelnen (atomistischen) Operation während der Aktivierung der Ersatzrecheneinheit zu garantieren und da häufig für die Fehlererkennung selbst mehr Zeit als für die Ausführung einer einzelnen Operation erforderlich ist, wird gewöhnlich die Ausführung des Programms von der Ersatzrecheneinheit unter Wiederholung einiger Operationen an einem von mehreren im Programm dafür eigens vorgesehenen früheren Punkt (Recovery-Point) wieder aufgenommen, den die ursprünglich das Programm ausführende Recheneinheit noch fehlerfrei erreicht hat (Rollback-Technik).

Vorzugsweise wird die Ausführung des Programms am zuletzt noch fehlerfrei erreichten Recovery-Point wieder aufgenommen. Dies ist jedoch nur dann möglich, wenn der Zeitpunkt des Fehlereintritts sowie der Zeitpunkt seiner Erkennung im gleichen Intervall zwischen denselben Recovery-Points, z.B. den Recovery-Point $RP_i$ und $RP_{i+1}$, liegt. Andernfalls muss die Ausführung des Programms am Recovery-Point $RP_{i-1}$ oder einem noch früheren Recovery-Point wieder aufgenommen werden (multiple-step Rollback-Technik).

Die Ersatzrecheneinheit benötigt zur Wiederaufnahme der Programmausführung an einem Recovery-Point neben dem Programm noch den Datenzustand, welcher im Arbeitsspeicher der das Programm ursprünglich ausführenden Recheneinheit an diesem Recovery-Point vorhanden war. Das zeitlich unveränderliche Programm kann der Ersatzrecheneinheit von Anfang an zur Verfügung gestellt werden. Vom sich laufend verändernden Datenzustand müssen dagegen an jedem Recovery-Point Kopien angelegt und mindestens bis zum Erreichen des jeweils nächsten Recovery-Points für die Ersatzrecheneinheit zugreifbar gespeichert werden.

Es hängt offensichtlich vom Mechanismus der Anlage dieser Kopien, dem Zugriffsmechanismus auf diese Kopien durch die Ersatzrecheneinheit sowie vom Abstand der einzelnen Recovery-Points im Programm ab, wie schnell die Ausführung des Programms durch die Ersatzrecheneinheit nach einem Fehler wieder aufgenommen und der bei Eintritt des Fehlers bereits erreichte Ausführungsstand des Programms wieder erreicht ist.

Die Datenzustandskopien werden in einer sogenannten Datensicherungseinheit (State-Save-Unit SSU) angelegt. Diese ist elektrisch isoliert sowie räumlich getrennt von der das Programm ausführenden Recheneinheit angeordnet, um von einem Fehler in dieser Recheneinheit nicht mitbetroffen zu werden. Wie bereits erwähnt, sollte die Ersatzrecheneinheit schnell auf die Datenzustands-Sicherungskopien zugreifen können. Es ist deshalb üblich, die Datensicherungseinheit nahe bei der Ersatzrecheneinheit anzuordnen.

Der einfachste Weg, die Datenzustandskopien an den Recovery-Point anzulegen, besteht darin, dass die das Programm ausführende Recheneinheit nach Erreichen jedes Recovery-Points den gesamten Inhalt des ihr zugeordneten Arbeitsspeichers in die Datensicherungseinheit überträgt. Während der dafür erforderlichen Zeit ist die Programmausführung jedoch unterbrochen.

Die Menge der in die Datensicherungseinheit zu übertragenden Daten lässt sich zeitsparend reduzieren, indem lediglich die durch die Schreibzugriffe im grade abgelaufenen Intervall z.B. zwischen den Recovery-Points $RP_i$ und $RP_{i+1}$ erfolgten Aenderungen $D_{i,\,i+1}$ zur Datensicherungseinheit übertragen werden. Dies ist möglich, weil der Datenzustand $S_{i+1}$ am Recovery-Point $RP_{i+1}$ sich vom vorhergehenden Datenzustand $S_i$ am Recovery-Point $RP_i$ lediglich durch die Aenderungen $D_{i,\,i+1}$ unterscheidet:
$$S_{i+1} = S_i + D_{i,\,i+1}.$$

Tritt bei dieser Art, die Datenzustands-bzw. Sicherungskopien anzulegen, während des Uebertragungsvorgangs der Daten bzw. der Aenderungen $D_{i,\,i+1}$ in die Datensicherungseinheit ein Fehler auf, so ergibt sich das Problem, dass der nicht mehr aktuelle "alte" Datenzustand $S_i$ durch die Daten bzw. Aenderungen des aktuelleren "neuen" Datenzustands $S_{i+1}$ bereits teilweise überschrieben, der "neue" Datenzustand $S_{i+1}$ aber noch nicht vollständig angelegt ist. In der Datensicherungseinheit ist dann kein gültiger Datenzustand verfügbar.

Eine Möglichkeit dieses Problem zu vermeiden, besteht in einer Verdoppelung der Datensicherungseinheit. Eine solche Verdoppelung ist bereits bekannt aus Ferridun, A.M.; Shien, K.G., A fault tolerant multiprocessor with Rollback Recovery capability, Proc. 2nd Intern. Conf. on Distr. Comp. Systems, Seiten 283 -289, 4/81.

Während eine Hälfte der verdoppelten Datensicherungseinheit jeweils zur Aufnahme des neuen Datenzustands, z.B. $S_{i+1}$, zur Verfügung steht, ist in der anderen Hälfte der "alte" Datenzustand $S_i$ konserviert. Die Funktion der beiden Hälften der verdoppelten Datensicherungseinheit (aktualisieren, konservieren) wechselt an jedem Recovery-Point.

Da der gesicherte Datenzustand, z.B. $S_i$, in der einen Hälfte der verdoppelten Datensicherungseinheit durch die Anlage des neuen Datenzustands $S_{i+1}$ in ihrer anderen Hälfte nicht beeinflusst wird, kann die Anlage des neuen Datenzustands $S_{i+1}$ innerhalb der Intervalle zwischen den Recovery-Points $RP_i$ und $RP_{i+1}$ während der Programmausführung erfolgen, so dass in der Regel keine Unterbrechung der Programmausführung mehr erforderlich ist.

Um den Datenzustand $S_{i+1}$ anzulegen, genügt es, innerhalb der Datensicherungseinheit den Datenzustand $S_i$ in ihre jeweils andere, grade zu aktualisierende Hälfte zu kopieren und in dieser Hälfte gleichzeitig die aktuellen Aenderungen $D_{i,\,i+1}$ zu registrieren. Andererseits genügt es auch, anstelle des gesamten Datenzustands $S_i$ lediglich diejenigen Aenderungen $D_{i-1,\,i}$ innerhalb der Datensicherungseinheit in die zu aktualisierende Hälfte zu transferieren, welche im vorhergehenden Intervall zwischen den Recovery-Points $RP_{i-1}$ und $RP_i$ in der im laufenden Intervall den Datenzustand $S_i$ enthaltenden Hälfte vorgenommen wurden, denn es gilt:

$$S_{i+1} = S_{i-1} + D_{i-1,\,i} + D_{i,\,i+1}.$$

Dazu müssen allerdings diejenigen Speicherworte bzw. Adressen der Datensicherungseinheit, die im vorhergehenden Intervall modifiziert wurden, markiert werden. Dies kann dadurch erfolgen, dass jedem Speicherwort der Datensicherungseinheit ein separates Bit zugeordnet wird. Ein weiteres Bit kann in bekannter Weise dazu verwendet werden, diejenigen Speicherworte der zu aktualisierenden Hälfte der Datensicherungseinheit zu kennzeichnen, in welchen im jeweils laufenden Intervall bereits aktuelle Aenderungen $D_{i,\,i+1}$ vorgenommen wurden. Dies erlaubt es, den Transfer der Aenderungen $D_{i-1,\,i}$ innerhalb der Datensicherungseinheit sowie die Registrierung der aktuellen Aenderungen $D_{i,\,i+1}$ ineinander verschachtelt vorzunehmen, da durch Prüfung des weiteren Bits ein Ueberschreiben der aktuellen Aenderungen $D_{i,\,i+1}$ mit Aenderungen $D_{i,\,i-1}$ aus dem vorhergehenden Intervall vermieden werden kann. An jedem Recovery-Point vertauscht sich die Bedeutung der beiden genannten Bits.

Mit der beschriebenen Methode können die Sicherungskopien in der Datensicherungseinheit ohne jegliche Beeinflussung der Programmführung angelegt werden, sofern der Transfer sämtlicher Aenderungen $D_{i-1,\,i}$ aus dem vorhergehenden Intervall innerhalb der Datensicherungseinheit abgeschlossen werden kann, bevor der jeweils nächste Recovery-Point in der Programmausführung erreicht wird. D.h. jedoch, dass der minimale Abstand zwischen zwei Recovery-Points durch die Transferzeit bestimmt wird.

Nun lassen sich aber die Recovery-Points nicht ohne weiteres an beliebigen Stellen im Programm sowie in beliebigen Abständen voneinander vorsehen. Probleme, welche beispielsweise bei der Wiederaufnahme der Programmausführung durch die Ersatzrecheneinheit durch die Wiederholung von Ausgabeoperationen an die Peripherie oder die Wiederholung von Interprozesskommunikation entstehen würden, lassen sich nur dadurch vermeiden, dass Recovery-Points jeweils unmittelbar nach solchen Operationen vorgesehen werden.

Dieses Erfordernis legt aber eine obere Grenze für den gegenseitigen Abstand der Recovery-Points fest. Der gegenseitige Abstand der Recovery-Points ist deshalb vor allem durch die Intensität der erforderlichen I/O-Operationen bestimmt. Er kann in bestimmten Anwendungsfällen kleiner sein als die zum Datentransfer innerhalb der Datensicherungseinheit erforderliche Zeit.

Der Erfindung stellt sich daher primär die Aufgabe, den Zeitbedarf innerhalb der Datensicherungseinheit zu reduzieren. Diese Aufgabe wird durch die Merkmale des Patentanspruchs 1 gelöst. Vorteilhafte Ausgestaltungen der Erfindung sind in den abhängigen Patentansprüchen gekennzeichnet.

Nach der Erfindung brauchen Daten innerhalb der Datensicherungseinheit, die im wesentlichen durch den zweiten Datenspeicher sowie die ihm zugeordnete Steuerlogik gebildet wird, nicht transferiert zu werden. Es werden stattdessen Zeigerbits verwendet, welche angeben, wo innerhalb der Datensicherungseinheit die zum "alten" und "neuen" Zustand gehörenden Daten abgespeichert sind. Die allein erforderliche Modifikation der Zeigerbits ist wesentlich effizienter als der bekannte Datentransfer innerhalb der Datensicherungseinheit und darüber hinaus unabhängig von der Speicherwortbreite. Die Zeigerbits werden aus Kontrollbits gebildet, welche in einem separaten, schnellen Speicher abgespeichert sein können. Die Bildung der Zeigerbits sowie ihre Modifikation erfordert nur einfachste logische Operationen. Die Bitoperationen können sukzessive, teilweise oder vollständig parallel ausgeführt werden. Die teilweise oder vollständig parallele Ausführung der Bitoperationen bringt in vorteilhafter Weise eine weitere Zeitersparnis mit sich. Der für die Kontrollbits vorzugweise verwendete schnelle Speicher sowie die für die Bitoperationen erforderliche Logik können in einem einzigen VSLI-Baustein integriert werden. Dadurch wird die Verarbeitungsgeschwindigkeit der Bits noch zusätzlich gesteigert. Diese Lösung führt zudem zu einem einfachen und eleganten schaltungstechnischen Aufbau. Die Datenverbindung ist vorzugsweise ein optischer Datenkanal. Dadurch wird in optimaler Weise eine galvanisch Trennung der Datensicherungseinheit von der das Programm ausführenden ersten Recheneinheit und dem ihr als Arbeitsspeicher zugeordneten ersten Datenspeicher erreicht. Ein Fehler in der ersten Recheneinheit bzw. im ersten Datenspeicher kann dadurch die in der Datensicherungseinheit gesicherten Daten nicht beeinflussen. Durch Verwendung eines Pufferspeichers auf der Sendeseite der Datenverbindung können die über die Datenverbindung zu übertragenden Daten (und Adressen) relativ gleichmässig zeitlich verteilt übertragen werden. Dadurch lässt sich die erforderliche Bandbreite der Datenverbindung in vorteilhafter Weise reduzieren.

Damit der gesicherte Datenzustand der als Ersatzrecheneinheit verwendeten zweiten Recheneinheit nach einem Fehler der ersten Recheneinheit möglichst unmittelbar zur Verfügung steht, kann die Steuerlogik so ausgebildet werden, dass sie der zweiten Recheneinheit einen direkten Zugriff auf den zweiten Datenspeicher erlaubt. Der zweite Datenspeicher wird in diesem Fall von der zweiten Recheneinheit unmittelbar als Arbeitsspeicher verwendet.

Die gesamte Mehrrechneranordnung kann symmetrisch aufgebaut sein, so dass sich die Recheneinheiten gegenseitig sichern. Es können auch drei oder noch mehr Recheneinheiten zu einem sich gegenseitig sichernden Netz zusammengeschaltet sein.

Weitere Ausgestaltungen und Vorteile der Erfindung ergeben sich aus der nachstehenden Erläuterung von Ausführungsbeispielen, wobei nunmehr auf die Zeichnung Bezug genommen wird. Es zeigt:

Fig. 1 eine fehlertolerante Mehrrechneranordnung nach der Erfindung mit einer ersten Ausführungsform der Steuerlogik, bei der die Bitoperationen sukzessive ausgeführt werden,

Fig. 2 eine schematische Darstellung zur Erläuterung solcher Bitoperationen,

Fig. 3 eine der Fig. 2 entsprechende schematische Darstellung zur Erläuterung weiterer Bitoperationen,

Fig. 4 eine Ausführungsform der Steuerlogik, bei der die Bitoperationen teilweise parallel ausgeführt werden,

Fig. 5 eine Ausführungsform der Steuerlogik, bei der die Bitoperationen vollständig parallel ausgeführt werden und

Fig. 6 eine fehlertolerante Mehrrechneranordnung nach der Erfindung mit zwei sich gegenseitig sichernden Systemen aus Recheneinheit, Datenspeicher und Steuerlogik.

In den Figuren sind übereinstimmende Teile mit übereinstimmenden Bezugszeichen versehen.

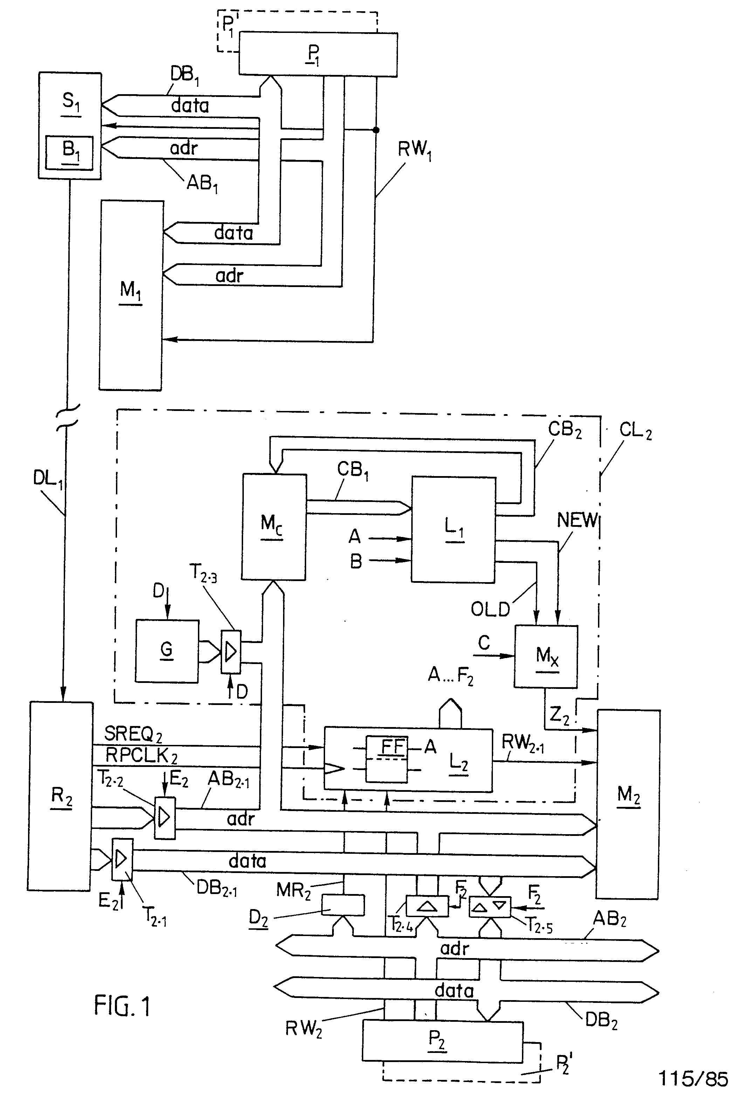

In Fig. 1 ist mit $P_1$ ein erster Prozessor bezeichnet. Dieser steht über einen Datenbus $DB_1$ und einen Adressbus $AB_1$ mit einem ersten Datenspeicher $M_1$ in Verbindung. Zur Steuerung der Speicheroperationen Schreiben/Lesen dient eine Steuerleitung $RW_1$. An den Datenbus $DB_1$ sowie den Adressbus $AB_1$ ist eine Sendeeinheit $S_1$ angeschlossen. Diese sendet bei allen Schreiboperationen des Prozessors $P_1$ in den ersten Datenspeicher $M_1$ die auf den mehradrigen Bussen $DB_1$ und $AB_1$ erscheinenden Adressen adr und Daten data, gegebenenfalls nach Zwischenspeicherung in einem Pufferspeicher $B_1$, über eine Datenverbindung $DL_1$ aus. Die Schreiboperationen erkennt die Sendeeinheit $S_1$ am logischen Zustand der Steuerleitung $RW_1$, die ihr ebenfalls zugeführt ist. Neben dem Prozessor $P_1$ kann ein weiterer Prozessor $P_1'$ vorgesehen werden, der mit dem Prozessor $P_1$ eine im folgenden als erste bezeichnete Recheneinheit bildet. Die beiden Prozessoren $P_1$, $P_1'$ dieser Recheneinheit können sich gegenseitig überprüfen und bei Auftreten eines Fehlers eine Fehlermeldung generieren und ihren Betrieb einstellen (Fail-Stop-Funktion).

Die über die Datenverbindung $DL_1$ übertragenen Daten data und Adressen adr werden in einer Empfangseinheit $R_2$ empfangen und gegebenenfalls wieder nach Zwischenspeicherung auf einen Datenbus $DB_{2.1}$ und einen Adressbus $AB_{2.1}$ ausgegeben. An die Busse $DB_{2.1}$ und $AB_{2.1}$ ist ein zweiter Datenspeicher $M_2$ angeschlossen. Dieser dient unter anderem als Sicherungsspeicher für die von der ersten Recheneinheit in den ersten Datenspeicher $M_1$ geschriebenen und über die Datenverbindung $DL_1$ zu ihm übertragenen Daten. Weitere Aufgaben des zweiten Datenspeichers $D_2$ werden weiter unten noch erläutert. Zur Ausübung seiner Sicherungsfunktion weist der zweite Datenspeicher $M_2$ mindestens zu jedem Speicherwort des ersten Datenspeichers $M_1$, in das von der ersten Recheneinheit während der Programmausführung geschrieben wird, ein Paar von Speicherworten unter jeweils entsprechender Adresse adr auf. Eines der beiden Speicherworte der Paare dient jeweils zur Speicherung des Inhalts des dem jeweiligen Paar adressmässig entsprechenden Spei cherworts im ersten Datenspeicher $M_1$ am letzten Recovery-Point. Das jeweils andere Speicherwort der Paare dient zur Speicherung des aktuellen, gegebenenfalls nach dem letzten Recovery-Point veränderten Inhalts dieses Speicherworts.

4

Durch die Adressen adr auf dem Adressbus $AB_{2.1}$ sind lediglich Paare von Speicherworten im zweiten Datenspeicher $M_2$ und nicht einzelne Speicherworte adressiert. Die Adressen adr sind für den zweiten Datenspeicher $M_2$ daher unvollständig. Zu ihrer Vervollständigung zur Speicherwortadresse des zweiten Datenspeichers $M_2$ bedarf es eines zusätzlichen Adressbits $Z_2$. Dieses wird von einer Steuerlogik $CL_2$ geliefert.

Die Steuerlogik $CL_2$ enthält einen Kontrollbitspeicher $M_C$, dessen Adresseingänge an den Adressbus $AB_{2.1}$ angeschlossen sind. Die Wortbreite des Kontrollbitspeichers $M_C$ beträgt drei Bit. Die entsprechend drei Datenausgänge des Kontrollbitspeichers $M_C$ sind an einen Kontrollbitbus $CB_1$ angeschlossen, der zu einer ersten Logik $L_1$ führt. Die erste Logik $L_1$ ist eingangsseitig ausserdem mit zwei Steuerleitungen A und B beaufschlagt, deren Bedeutung noch erläutert wird. Ausgangsseitig verlassen die erste Logik $L_1$ ein weiterer Kontrollbus $CB_2$, welcher zum Kontrollbitspeicher $M_C$ zurückführt sowie zwei Signalleitungen OLD und NEW. Letztere führen auf einen Multiplexer $M_X$, welcher in Abhängigkeit vom logischen Zustand einer Steuerleitung C eine von ihnen auf seinen Ausgang durchschaltet. Dieser Ausgang liefert das bereits erwähnte zusätzliche Adressbit $Z_2$ für den zweiten Datenspeicher $M_2$.

Die Steuerlogik $CL_2$ enthält weiter eine zweite Logik $L_2$. Diese ist mit zwei Signalleitungen $SREQ_2$ und $RPCLK_2$ beaufschlagt, welche an Ausgängen der Empfangseinheit $R_2$ angeschlossen sind. Ausgangsseitig verlassen die zweite Logik $L_2$ die bereits erwähnten Steuerleitungen A, B und C sowie weitere Steuerleitungen D, $E_2$, $F_2$ und $RW_{2.1}$.

Die Steuerleitung D beaufschlagt einen Drei-Zustands-Treiber $T_{2.3}$, über den ein Adressgenerator G an den Adressbus $AB_{2.1}$ angeschlossen ist. Die Steuerleitungen $E_2$, $F_2$ und $RW_{2.1}$ führen aus der Steuerlogik $CL_2$ heraus. Die Steuerleitung $RW_{2.1}$ dient zur Steuerung der Speicheroperationen Schreiben/Lesen im zweiten Datenspeicher $M_2$ und ist deshalb an diesen angeschlossen. Mit der Steuerleitung $E_2$ sind Drei-Zustands-Treiber $T_{2.1}$ und $T_{2.2}$ in den Bussen $AB_{2.1}$ und $DB_{2.1}$ beaufschlagt.

Vervollständigt wird die fehlertolerante Mehrrechneranordnung nach Fig. 1 durch eine zweite Recheneinheit, die, wie die erste Recheneinheit, zwei sich gegenseitig überprüfende Prozessoren $P_2$ und $P_2'$ aufweist, sowie durch diesen zugeordnete Adress-und Datenbusse $AB_2$ und $DB_2$. Letztere sind über Drei-Zustands-Treiber $T_{2.4}$ und $T_{2.5}$ mit den Bussen $AB_{2.1}$ und $DB_{2.1}$ verbunden. Der Drei-Zustands-Treiber $T_{2.5}$ ist bidirektional ausgebildet. Die Drei-Zustands-Treiber $T_{2.4}$ und $T_{2.5}$ sind mit der Steuerleitung $F_2$ beaufschlagt. An den Adressbus $AB_2$ ist ein Decodierer $D_2$ angeschlossen, welcher aus den auf diesem Bus erscheinenden Adressen adr ein Speicheranforderungssignal $MR_2$ generiert, welches einem Eingang der zweiten Logik $L_2$ in der Steuerlogik $CL_2$ zugeführt ist. Schliesslich ist die zweite Logik $L_2$ noch mit einer weiteren Steuerleitung $RW_2$ beaufschlagt, die direkt an die zweite Recheneinheit aus Prozessor $P_2$ und $P_2'$ angeschlossen und die eine Schreib/Lese-Steuerleitung ist.

Die vorstehend in ihrem Aufbau beschriebene fehlertolerante Mehrrechneranordnung arbeitet in folgender Weise: Durch die erste Recheneinheit wird ein Programm abgearbeitet. Dieses ist mit Recovery-Points versehen. An jedem dieser Recovery-Points soll im zweiten Datenspeicher $M_2$ der Datenzustand des ersten Datenspeiher $M_1$ als Sicherungskopie vorhanden sein, damit die zweite Recheneinheit im Falle eines Ausfalls der ersten Recheneinheit die Ausführung des Programms am vorzugsweise letzten von der ersten Recheneinheit noch fehlerfrei erreichten Recovery-Point übernehmen und fortführen kann. Neben dem Datenzustand braucht die zweite Recheneinheit dazu natürlich auch das Programm selbst. Dies soll ihr jedoch von Anfang an zur Verfügung stehen.

Im folgenden wird zunächst erläutert, wie die Sicherungskopien im zweiten Datenspeicher $M_2$ angelegt werden. Auf welche Weise die zweite Recheneinheit bei einem Ausfall der ersten Recheneinheit auf die Sicherungskopien zugreift, wird im Anschluss daran erläutert.

Zur Anlage der Sicherungskopien werden alle Daten data, die die erste Recheneinheit in den ersten Datenspeicher $M_1$ schreibt und durch welche dessen Datenzustand verändert wird, von der Sendeeinheit $S_1$ erfasst und gemeinsam mit ihren Adressen adr über die Datenverbindung $DL_1$ zur Empfangseinheit $R_2$ übertragen. Von dieser gelangen die Daten data über den Datenbus $DB_{2.1}$ und die Adressen adr über den Adressbus $AB_{2.1}$ zum zweiten Datenspeicher $M_2$. Wie bereits ausgeführt, sind die mitübertragenen Adressen adr für den zweiten Datenspeicher $M_2$ unvollständig, da jeweils zwei Speicherworte im zweiten Datenspeicher $M_2$ die Adresse adr aufweisen. Zur Vervollständigung der Adressen adr wird von der Steuerlogik $CL_2$ jeweils das zusätzliche Bit $Z_2$ generiert. Bei der Erzeugung dieses Bits muss die Steuerlogik dafür Sorge tragen, dass im zweiten Datenspeicher $M_2$ keine zum "alten" Zustand, d.h. zum Zustand am zuletzt von der ersten Recheneinheit noch fehlerfrei erreichten REcovery-Point gehörenden Daten überschrieben werden. Dit Steuerlogik $CL_2$ muss daher wissen, in welchem der beiden Speicherworte der Paare mit der

5

gemeinsamen Adresse adr das zum "alten" Zustand gehörende Datum abgespeichert ist. Darüber hinaus muss sich die Steuerlogik jeweils merken, in welches der Speicherworte unter ihrer Kontrolle ein zum "neuen" Zustand gehöriges, d.h. ein nach dem zuletzt noch fehlerfrei erreichten Recovery-Point von der ersten Recheneinheit in den ersten Datenspeicher geschriebenes Datum, abgespeichert wurde.

Zur Speicherung dieser Information sind pro Adresse adr zwei Kontrollbits BIT1(adr) und BIT2(adr) im Kontrollbitspeicher $M_C$ vorgesehen. Neben den Kontrollbits BIT1(adr) und BIT2(adr) enthält der Kontrollbit-speicher $M_C$ pro Adresse adr noch ein weiteres Kontrollbit BIT3(adr), dessen Bedeutung noch erläutert werden wird.

Gleichzeitig mit der Adressierung der Speicherwortpaare im zweiten Arbeitsspeicher $M_2$ werden die jeweils zugehörigen, ein Triplet bildenden Kontrollbits im Kontrollbitspeicher $M_C$ adressiert, da dieser an den Adressbus $AB_{2.1}$ mit angeschlossen ist. Die jeweils adressierten Kontrollbits BIT1(adr), BIT2(adr) und BIT3(adr) erscheinen an den drei Datenausgängen des Kontrollbitspeichers $M_C$ und gelangen über den Kontrollbitbus $CB_1$ in die erste Logik $L_1$. In dieser wird aus den Kontrollbits BIT1(adr) und BIT2(adr) sowie einem Steuerbit A mittels einfacher logischer Gatter ein Zeigerbit OLD(adr) nach der Vorschrift

$$OLD(adr) := BIT1(adr) \cdot \overline{A} + BIT2(adr) \cdot A$$

gebildet. Ausserdem wird ein Zeigerbit NEW(adr) nach der Vorschrift

$$NEW(adr) := \overline{OLD(adr)},$$

d.h. durch Inversion des Zeigerbits OLD(adr) gebildet. Vorstehend, wie auch im folgenden, bedeutet der Punkt eine UND-Verknüpfung, das Pluszeichen eine ODER-Verknüpfung und der Querstrich über den Symbolen die Negation.

Wie sich leicht anhand der Bildungsvorschrift für das Zeigerbit OLD(adr) sowie anhand der nachstehenden 1. Wahrheitstabelle nachvollziehen lässt, entspricht das Zeigerbit OLD(adr), abhängig vom binären Zustand des Steuerbits A alternativ dem Kontrollbit BIT1(adr) oder dem Kontrollbit BIT2(adr).

1. Wahrheitstabelle

| A | BIT1(adr) | BIT2(adr) | OLD(adr) |
|---|-----------|-----------|----------|
| 0 | 0 | 0 | 0 |
| 0 | 0 | 1 | 0 |
| 0 | 1 | 0 | 1 |
| 0 | 1 | 1 | 1 |
| 1 | 0 | 0 | 0 |
| 1 | 0 | 1 | 1 |
| 1 | 1 | 0 | 0 |
| 1 | 1 | 1 | 1 |

Das Steuerbit A wird von der zweiten Logik $L_2$ erzeugt und gelangt über die gleichnamige Steuerleitung A zur ersten Logik $L_1$. Es wechselt an jedem Recovery-Point seinen binären Zustand. Es wird vorzugsweise vom Ausgangszustand eines in der zweiten Logik $L_2$ enthaltenen Flip-Flops FF abgeleitet. Das Erreichen eines Recovery-Points kann beispielsweise der Sendeeinheit $S_1$ durch die erste Recheneinheit mittels einer über den Datenbus $DB_1$ übertragenen Meldung angezeigt werden. Die Sendeeinheit $S_1$ überträgt jeweils auf diese Meldung hin eine entsprechende Nachricht zur Empfangseinheit $R_2$. Diese generiert bei Erhalt dieser Nachricht ein Recovery-Point-Takt-Signal, welches auf der Signalleitung $RPCLK_2$ zur zweiten Logik $L_2$ gelangt, welche daraufhin den binären Zustand des Steuerbits A bzw. des Flip-Flops FF invertiert.

Die Zeigerbits OLD(adr) und NEW(adr) werden von der ersten Logik $L_1$ auf den Steuerleitungen OLD und NEW ausgegeben und gelangen über diese zum Multiplexer $M_X$. Sie dienen alternativ, abhängig vom logischen Zustand der Steuerleitung C am Multiplexer $M_X$, als zusätzliches Adressbit $Z_2$ für den zweiten Datenspeicher $M_2$. Das Zeigerbit OLD(adr) adressiert jeweils dasjenige Speicherwort der Paare im zweiten Datenspeicher $M_2$, welches das zum "alten" Zustand gehörende Datum enthält, während durch das Zeigerbit NEW(adr) jeweils dasjenige Speicherwort adressiert wird, in das das neue (auf dem Datenbus $DB_{2.1}$ anliegende) Datum geschrieben werden soll (bzw. geschrieben worden ist). Es versteht sich, dass beim hier zunächst betrachteten Schreibvorgang in den zweiten Datenspeicher $M_2$ zur Sicherung von Daten, die über die Datenverbindung $DL_1$ übertragen wurden, das Zeigerbit NEW(adr) vom Multiplexer $M_X$ ausgewählt werden muss. Das Zeigerbit OLD(adr) dient jeweils zum noch zu besprechenden Lesezugriff auf den "alten" Datenzustand durch zweite Recheneinheit. Dadurch, dass das Zeigerbit NEW(adr) jeweils mit inversem binären Zustand zum Zeigerbit OLD(adr) in der ersten Logik $L_1$ gebildet wird, ist in einfacher Weise sichergestellt, dass zum "alten" Datenzustand gehörende Daten im zweiten Datenspeicher $M_2$ nicht überschrieben werden.

Der die Auswahl der beiden Zeigerbits OLD(adr) und NEW(adr) bestimmende binäre Zustand der Steuerleitung C wird von der zweiten Logik $L_2$ kontrolliert. Diese empfängt jedesmal, wenn in der Empfangseinheit $R_2$ Daten und Adressen bereit stehen, von letzterer ein Sicherungs-Anforderungs-Signal auf der Signalleitung $SREQ_2$. Auf dieses Signal hin wird von der zweiten Logik $L_2$ der binäre Zustand der Steuerleitung C so eingestellt, dass das Zeigerbit NEW(adr) am Multiplexer $M_X$ durchgeschaltet wird. Ueber die Schreib/Lese-Steuerleitung $RW_{2.1}$ teilt die zweite Logik $L_2$ dem zweiten Datenspeicher $M_2$ mit, dass die auf dem Datenbus $DB_{2.1}$ anliegenden Daten gespeichert werden sollen.

Wie bereits erwähnt, muss sich die Steuerlogik $CL_2$ merken, wohin die neuen Daten geschrieben werden. Es werden dazu in der Logik $L_1$ aus dem Zeigerbit OLD(adr) und NEW(adr) sowie dem Steuerbit A nach den Vorschriften

BIT1(adr): = NEW(adr) . A + OLD(adr) . $\overline{A}$ und

BIT2(adr): = NEW(adr) . $\overline{A}$ + OLD(adr) . A

die Kontrollbits BIT1(adr) und BIT2(adr) neu bestimmt und über den Kontrollbitbus $CB_2$ in den Kontrollbitspeicher $M_C$ unter Ueberschreiben der ursprünglichen Werte dieser Kontrollbits eingeschrieben. Wie sich wiederum anhand der angegebenen Bildungsvorschriften für die Kontrollbits BIT1(adr) und BIT2(adr) sowie anhand der nachstehenden 2. Wahrheitstabelle nachvollziehen lässt, wird jedoch nur dasjenige Kontrollbit effektiv neu bestimmt, welches, abhängig vom logischen Zustand des Steuerbits A, nicht grade dem Zeigerbit OLD(adr) entspricht. Das dem Zeigerbit OLD(adr) entsprechende Kontrollbit bleibt, zur Erhaltung der Information, in welcher der Speicherwortpaare des zweiten Datenspeichers $M_2$ das zum "alten" Zustand gehörende Datum gespeichert ist, unverändert.

2. Wahrheitstabelle

| A | BIT1(adr) (alt) | BIT2(adr) (alt) | OLD(adr) | NEW(adr) | BIT1(adr) (neu) | BIT2(adr) (neu) |
|---|---|---|---|---|---|---|
| 0 | 0 | 0 | 0 | 1 | 0 | 1 |
| 0 | 0 | 1 | 0 | 1 | 0 | 1 |
| 0 | 1 | 0 | 1 | 0 | 1 | 0 |
| 0 | 1 | 1 | 1 | 0 | 1 | 0 |

Fortsetzung 2. Wahrheitstabelle

| A | BIT1(adr) (alt) | BIT2(adr) (alt) | OLD(adr) | NEW(adr) | BIT1(adr) (neu) | BIT2(adr) (neu) |
|---|---|---|---|---|---|---|
| 1 | 0 | 0 | 0 | 1 | 1 | 0 |
| 1 | 0 | 1 | 1 | 0 | 0 | 1 |
| 1 | 1 | 0 | 0 | 1 | 1 | 0 |
| 1 | 1 | 1 | 1 | 0 | 0 | 1 |

Die Recovery-Points, deren Erreichen der Steuerlogik $CL_2$ bzw. der in ihr enthaltenen zweiten Logik $L_2$ durch das Recovery-Point-Takt-Signal auf der Signalleitung $RPCLK_2$ angezeigt wird, stellen nun für den beschriebenen Speichervorgang wichtige zeitliche Einschnitte dar. An ihnen werden aus sämtlichen, vorher zum "neuen" Zustand gehörenden Daten im zweiten Datenspeicher $M_2$, zum "alten" Zustand gehörende Daten, da der alte Zustand sich jeweils auf den zuletzt erreichten Recovery-Point bezieht. Indem das Steuerbit A an jedem Recovery-Point invertiert wird, wird dem jedoch in einfacher Weise Rechnung getragen. Nach Inversion des Steuerbits A wird das Zeigerbit OLD(adr) von der ersten Logik $L_1$ nämlich vom jeweils anderen Kontrollbit BIT1(adr) bzw. BIT2(adr) abgeleitet als zuvor. Wurde beispielsweise im abgelaufenen Intervall zwischen dem zuvor erreichten Recovery-Point $RP_{i-1}$ und dem aktuellen Recovery-Point $RP_i$ das Zeigerbit OLD(adr) vom Kontrollbit BIT1(adr) abgeleitet, so wird es nunmehr, im laufenden Intervall bis zum Erreichen des nächsten Recovery-Points $RP_{i+1}$ vom Kontrollbit BIT2(adr) abgeleitet. Dieses enthält aber grade die Information, in welches der Speicherworte der Speicherwortpaare des zweiten Datenspeichers $M_2$ das im grade abgelaufenen Intervall als zum "neuen", nunmehr zum "alten" Zustand gehörende Datum geschrieben wurde. Die zum "alten" Datenzustand gehörenden Daten sind damit nach der sehr schnell durch einfaches Umschalten des Flip-Flops FF in der Logik $L_2$ ausführbaren Inversion des Steuerbits A unmittelbar verfügbar.

Bei der bisherigen Betrachtung wurde allerdings ausser acht gelassen, dass in der Regel in den Intervallen zwischen den Recovery-Points nur auf einen Teil der Adressen adr Schreibzugriffe erfolgen. Für die Adressen adr, in die im abgelaufenen Intervall nicht geschrieben wurde, adressiert das Zeigerbit OLD-(adr) im laufenden Intervall nach der Inversion des Steuerbits A das jeweils zum "alten" Zustand gehörende Datum aber nur dann richtig, wenn zumindest am Ende des abgelaufenen Intervalls die beiden Kontrollbits BIT1(adr) und BIT2(adr) übereinstimmten.

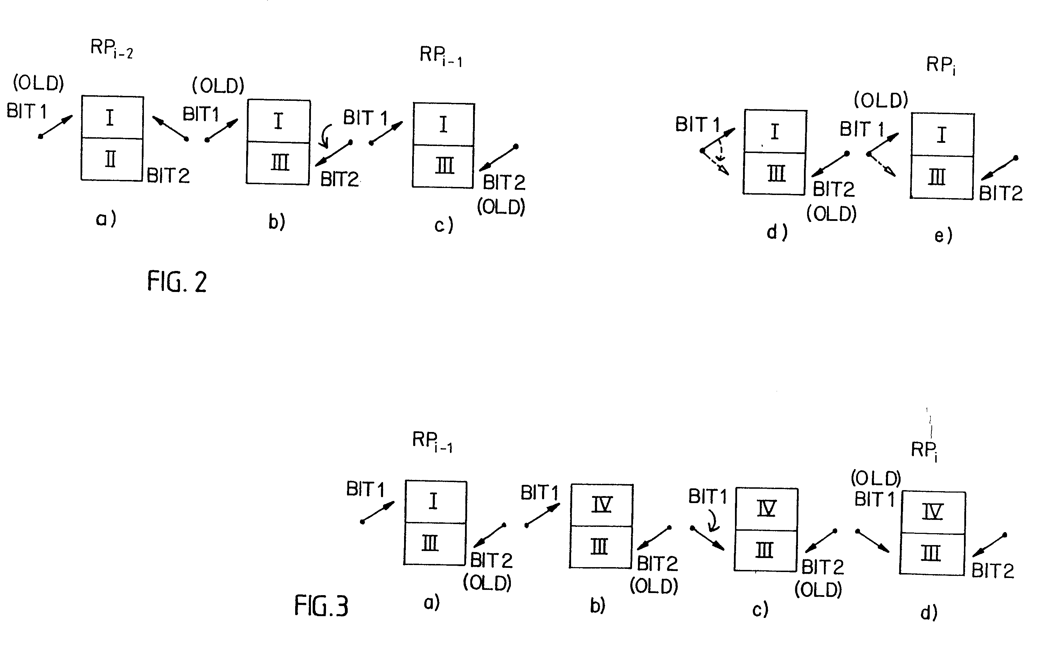

Fig. 2 verdeutlicht dieses Problem. Unter a) bis e) ist in Fig. 2 ein Paar von Speicherworten des zweiten Datenspeichers $M_2$ schematisch dargestellt, wobei es sich jeweils um das gleiche Speicherwortpaar handeln soll. Zu beiden Seiten des Speicherwortpaares sind als auf das eine oder das andere Speicherwort zeigende Pfeile jeweils die logischen Zustände der zu diesem Paar gehörenden Kontrollbits BIT1(adr) und BIT2(adr) dargestellt. Fig. 2a) zeigt beispielsweise den Datenzustand der Speicherworte an einem Recovery-Point $RP_{i-2}$. Das obere der beiden Speicherworte enthält ein Datum I, während das untere Speicherwort ein Datum II enthält. Beide Kontrollbits BIT1(adr) und BIT2(adr) "zeigen" auf das obere Speicherwort mit dem Datum I, das dem im entsprechenden Speicherwort des ersten Datenspeichers $M_1$ am Recovery-Point $RP_{i-2}$ enthaltenen Datum entsprechen soll. Das Datum II soll ein älteres, nicht mehr aktuelles Datum sein. Bis zum Recovery-Point $RP_{i-1}$ soll das Zeigerbit OLD(adr) vom Kontrollbit BIT1(adr) abgeleitet sein. Vor Erreichen dieses Recovery-Points $RP_{i-1}$ soll nun im dargestellten Paar von Speicherworten ein neues Datum III gespeichert werden. Es muss zur Erhaltung des aktuelleren "alten" Datums I in das untere Speicherwort geschrieben werden. Dies ergibt sich, wie bereits erläutert, automatisch dadurch, dass als zusätzliches Adressbit $Z_2$ für den zweiten Datenspeicher $M_2$ am Multiplexer $M_X$ das Zeigerbit NEW-(adr) ausgewählt wird, welches einen zum Zeigerbit OLD(adr) und damit hier zum Kontrollbit BIT1(adr) inversen logischem Zustand aufweist. Bei der Neubestimmung der Kontrollbits BIT1(adr) und BIT2(adr) nach dem Einschreiben des neuen Datums III in dies untere Speicherwort des dargestellten Speicherwortpaares aus den Zeigerbits OLD(adr) und NEW(adr) sowie dem Steuerbit A wird das Kontrollbit BIT2(adr) invertiert. Es "zeigt" nach dem Zurückschreiben in den Kontrollbitspeicher $M_C$ nunmehr auf das untere Speicherwort mit dem neuen Datum III. Das Kontrollbit BIT1(adr) bleibt unverändert. Dies ist in Fig. 2b) dargestellt. Am Recovery-Point $RP_{i-1}$ erhält, wie in Fig. 2c) dargestellt, das Kontrollbit BIT2(adr) die Bedeutung des Zeigerbits OLD(adr). Das neue "alte" Datum ist jetzt das Datum III in dem unteren Speicherwort. Im Intervall zwischen den Recovery-Points $RP_{i-1}$ und $RP_i$ soll kein neues Datum mehr in das dargestellte Paar von Speicherworten geschrieben werden. Am Recovery-Point $RP_i$ würde nun aber,

nachdem das Kontrollbit BIT1(adr) seine Bedeutung als Zeigerbit OLD(adr) zurückerhalten hat, dieses auf das falsche "alte" Datum I in dem oberen Speicherwort zeigen. Das aktuellere, neue "alte" Datum III ist ja jetzt in dem unteren Speicherwort enthalten. Dies in Fig. 2e) dargestellt. Dieses Problem lässt sich in einfacher Weise jedoch dadurch lösen, dass irgendwann im Intervall zwischen den Recovery-Points $RP_{i-1}$ und $RP_i$, wie in Fig. 2d) strichliert dargestellt, das grade nicht dem Zeigerbit OLD(adr) entsprechende Kontrollbit, hier das Kontrollbit BIT1(adr), dem dem Zeigerbit OLD(adr) entsprechenden Kontrollbit, hier dem Kontrollbit BIT2(adr), gleichgesetzt wird. Diese Gleichsetzung muss natürlich für alle Adressen adr erfolgen, die im vorhergehenden Intervall nicht Gegenstand eines Schreibzugriffs waren. Die Gleichsetzung muss darüber hinaus für alle Adressen bis zum Erreichen des nächsten Recovery-Points abgeschlossen sein.

Innerhalb der Steuerlogik $CL_2$ wird diese Gleichsetzungsoperation dadurch ausgeführt, dass vom Adressgenerator G sukzessive sämtliche Adressen adr generiert werden, welche über den Adressbus $AB_{2.1}$ den Kontrollbitspeicher $M_C$ erreichen. Wie bei Adressierung durch Adressen adr, welche von der Empfangseinheit $R_2$ auf den Adressbus $AB_{2.1}$ augegeben werden, wird aus dem Kontrollbitspeicher $M_C$ das jeweils adressierte Triplet von Kontrollbits ausgelesen und über den Kontrollbitbus $CB_1$ der ersten Logik $L_1$ zugeführt. Diese bildet aus den Kontrollbits BIT1(adr) und BIT2(adr) in der bereits beschriebenen Weise das Zeigerbit OLD(adr). Das Zeigerbit NEW(adr) wird jetzt allerdings nach der Vorschrift

NEW(adr): = OLD(adr),

d.h. mit dem gleichen logischen Zustand wie das Zeigerbit OLD(adr) gebildet. Anschliessend werden die Kontrollbits BIT1(adr) und BIT2(adr) (bzw. eines der beiden) in der bereits angegebenen Weise wieder neu bestimmt und in den Kontrollbitspeicher $M_C$ zurückgeschrieben. Ein Schreibvorgang in den zweiten Datenspeicher $M_2$ findet dabei nicht statt. Es handelt sich dabei also um eine rein innerhalb der Steuerlogik $CL_2$ ablaufende Operation.

Von der ersten Logik $L_1$ müssen, nach dem Vorstehenden, zwei verschiedene Operationen hinsichtlich der Bildung des Zeigerbits NEW(adr) ausgeführt werden können. Zur Information der ersten Logik $L_1$, welche der beiden Operationen sie ausführen soll, dient die Steuerleitung B. Immer dann, wenn in der Empfangseinheit $R_2$ keine Daten zur Sicherung im zweiten Datenspeicher $M_2$ anstehen, was die zweite Logik $L_2$ beispielsweise am Signalpegel auf der Signalleitung $SREQ_2$ erkennt, stellt diese den logischen Zustand der Steuerleitung B derart ein, dass die zuletzt beschriebene Gleichsetzungsoperation von der ersten Logik $L_1$ ausgeführt wird. Gleichzeitig gibt die zweite Logik $L_2$ über die Steuerleitungen D die Adressgenerierung am Adressgenerator G sowie am Drei-Zustand-Treiber $T_{2.3}$ dessen Aufschaltung auf den Adressbus $AB_{2.1}$ frei. Ueber die Steuerleitungen $E_2$ koppelt sie gleichzeitig die Empfangseinheit $R_2$ mittels der beiden Drei-Zustands-Treiber $T_{2.1}$ und $T_{2.2}$ vom Adressbus $AB_{2.1}$ sowie vom Datenbus $DB_{2.1}$ ab. Sobald jedoch in der Empfangseinheit $R_2$ wieder neue Daten zur Sicherung im zweiten Datenspeicher $M_2$ bereitstehen, wird die Ausführung der Gleichsetzungsoperationen von der zweiten Logik $L_2$ unterbrochen und es werden die neuen Daten in den zweiten Datenspeicher $M_2$ eingeschrieben.

Die beiden verschiedenen Operationen können deshalb innerhalb der Intervalle zwischen den Recovery-Points im Wechsel auftreten. Daraus ergibt sich jedoch ein Datenkonsistenzproblem, welches anhand von Fig. 3 erläutert werden soll. Fig. 3 entspricht in der Darstellung Fig. 2. Insbesondere entspricht Fig. 3a) der Fig. 2b). Zwischen den Recovery-Points $RP_{i-1}$ und $RP_i$ ist in Fig. 3c) zusätzlich ein Schreibvorgang angenommen, wobei als "neues" Datum das Datum IV in das obere Speicherwort geschrieben wird. Dabei wird, wie in Fig. 2b), das nicht grade die Bedeutung des Zeigerbits OLD(adr) tragende Kontrollbit, d.h. jetzt das Kontrollbit BIT1(adr), invertiert, so dass es auf das Speicherwort mit dem neuen Datum IV "zeigt". Würde nun anschliessend für das dargestellte Paar von Speicherworten die in Fig. 2e) strichliert eingezeichnete Gleichsetzungsoperation ausgeführt, so würde am folgenden Recovery-Point $RP_i$ das wieder die Bedeutung des Zeigerbits OLD(adr) übernehmende Kontrollbit BIT1(adr) auf das Speicherwort mit dem alten "alten" Datum IV "zeigen" und nicht auf das Speicherwort mit dem nunmehr aktuelleren neuen "alten" Datum IV. Es muss also verhindert werden, dass die Gleichsetzungsoperationen für Adressen von Speicherwortpaaren ausgeführt werden, in die im laufenden Intervall bereits ein neues Datum geschrieben wurde.

Dies kann in einfacher Weise dadurch erreicht werden, dass sich die Steuerlogik $CL_2$ merkt, in welche Adressen im laufenden Intervall bereits neue Daten geschrieben wurden. Zur Speicherung dieser Information dient das Kontrollbit BIT3(adr) im Kontrollbitspeicher $M_C$. Aus dem Kontrollbit BIT3(adr) und dem Steuerbit A wird von der ersten Logik $L_1$ ein Initialisierungsbit INI(adr) nach der Vorschrift

$$INI(adr): = BIT3(adr) \cdot \overline{A} + \overline{BIT3(adr)} \cdot A$$

gebildet.

Das Initialisierungsbit INI(adr) wird bei jeder Operation, bei der zu sichernde Daten in den zweiten Datenspeicher $M_2$ eingeschrieben werden, im folgenden als Datensicherungsoperation bezeichnet, von der ersten Logik $L_1$ auf einen ersten logischen Zustand, beipielsweise auf "1" gesetzt. Gemeinsam mit der beschriebenen Neubestimmung des Kontrollbits BIT1(adr) und BIT2(adr) wird aus dem Initialisierungsbit INI-(adr) und dem Steuerbit A das Kontrollbit BIT3(adr) nach der Vorschrift

BIT3(adr): = INI(adr) . $\overline{A}$   +   $\overline{INI(adr)}$ . A

bestimmt und gemeinsam mit diesen über den Kontrollbitbus $CB_2$ in den Kontrollbitspeicher $M_C$ wieder eingeschrieben.

Vor Beginn der Programmausführung durch die erste Recheneinheit müssen die Kontrollbits BIT1(adr), BIT2(adr) und BIT3(adr) sowie das Steuerbit A so eingestellt werden, dass kein Paar von Speicherworten fälschlicherweise als schon initialisiert gilt. Deshalb dürfen folgende Kombinationen nicht auftreten:

| BIT1 | BIT2 | BIT3 | A |
|------|------|------|---|
| 0 | 1 | 0 | 1 |
| 0 | 1 | 1 | 0 |
| 1 | 0 | 0 | 1 |
| 1 | 0 | 1 | 0 |

Bei jeder Ausführung einer Gleichsetzungsoperation durch die erste Logik $L_1$ wird das Initialisierungsbit INI(adr) nach der oben angegebenen Vorschrift von der Logik $L_1$ gebildet und auf seinen logischen Zustand hin überprüft. Entspricht der logische Zustand des Initialisierungsbits INI(adr) bei einer Adresse adr dem genannten ersten logischen Zustand, also z.B. "1", so wird die Gleichsetzungsoperation für die betreffende Adresse adr von der ersten Logik $L_1$ nicht ausgeführt, da diese Adresse im laufenden Intervall bereits Gegenstand einer Schreiboperation gewesen sein muss.

Für alle Adressen adr, für die dies nicht der Fall ist, für die Gleichsetzungsoperation also durchgeführt wird, wird gleichwohl nach Ausführung der Gleichsetzungsoperation das Initialisierungsbit INI(adr) von der ersten Logik $L_1$ auf den ersten logischen Zustand gesetzt, danach das Kontrollbit BIT3(adr) neu bestimmt und in den Kontrollbitspeicher eingeschrieben. Dadurch ist sichergestellt, dass am nächsten Recovery-Point sämtliche Kontrollbits BIT3(adr) den gleichen logischen Zustand aufweisen und das Initialisierungsbit INI-(adr), gebildet nach der oben angegebenen Vorschrift, nach Inversion des Steuerbits A, jeweils den zum ersten logischen Zustand inversen logischen Zustand, d.h. z.B. "0," aufweisen.

Soweit sind alle wesentlichen Operationen beschrieben, welche zur Anlage der Sicherungskopien im zweiten Datenspeicher $M_2$ erforderlich sind.

Will nun die zweite Recheneinheit nach einem Fehler der ersten Recheneinheit auf ein zur Sicherungskopie des Daten zustands des ersten Datenspeichers $M_1$ am letzten von der ersten Recheneinheit noch erreichten Recovery-Point im zweiten Datenspeicher $M_2$ gehörendes Datum zugreifen, so tut sie dies einfach dadurch, dass sie die Adresse adr dieses Datum auf ihren Adressbus $AB_2$ legt. Der an den Adressbus $AB_2$ angeschlossene Decodierer $D_2$ generiert daraufhin das Speicheranforderungssignal $MR_2$, das der zweiten Logik $L_2$ in der Steuerlogik $CL_2$ die Zugriffsabsicht der zweiten Recheneinheit auf den zweiten Datenspeicher $M_2$ signalisiert. Diese koppelt daraufhin durch entsprechende Steuerung der Drei-Zustands-Treiber $T_{2.1}$ , $T_{2.2}$ und $T_{2.3}$über die Steuerleitung $E_2$ und D die Empfangseinheit $R_2$ sowie den Adressgenerator G von den Bussen $AB_{2.1}$ und $DB_{2.1}$ab und stellt durch entsprechende Steuerung der Drei-Zustands-Treiber $T_{2.4}$ und $T_{2.5}$ über die Steuerleitungen $F_2$ deren Verbindung mit den Bussen $AB_2$ und $DB_2$ her. Ueber die Schreib/Lese-Steuerleitung $RW_2$ teilt die zweite Recheneinheit der Logik $L_2$ und diese über die Schreib/Lese-Steuerleitung $RW_{2.1}$ dem zweiten Datenspeicher $M_2$ mit, dass aus ihm gelesen werden soll.

Natürlich sind auch die von der zweiten Recheneinheit ausgegebenen Adressen adr für den zweiten Datenspeicher $M_2$ unvollständig. Auch diese Adressen adr bedürfen der Ergänzung durch das zusätzliche Adressbit $Z_2$. Dieses wird, in gleicher Weise wie vorstehend beschrieben, von der Steuerlogik $CL_2$ unter Verwendung der im Kontrollbitspeicher $M_C$ gespeicherten Kontrollbits sowie der Steuerbits A gebildet, nur dass jetzt am Multiplexer $M_X$ über die Steuerleitung C das Zeigerbit OLD(adr) ausgewählt und durchgeschaltet wird.

Da nach Uebernahme der Programmausführung durch die zweite Recheneinheit kein den logischen Zustand des Steuersignals A invertierendes Recovery-Point-Takt-Signal mehr generiert wird, bleibt der logische Zustand des Steuersignals A unverändert. Dadurch wird das Zeigerbit OLD(adr) stets vom gleichen Satz von Kontrollbits BIT1(adr) oder BIT2(adr) abgeleitet, wobei es unerheblich ist, im Rahmen welcher der beiden möglichen Operationen es in der ersten Logik $L_1$ gebildet wird.

Auf die beschriebene Weise kann die zweite Recheneinheit nach einem Ausfall der ersten Recheneinheit direkt auf die gesicherten Daten im zweiten Datenspeicher $M_2$ zugreifen.

Gemäss einer bevorzugten Ausführungsform der Erfindung wird der zweite Datenspeicher $M_2$ nicht lediglich als Sicherungsspeicher sondern gleichzeitig von der zweiten Recheneinheit auch als Arbeitsspeicher verwendet. Es müssen dazu im zweiten Datenspeicher $M_2$ zwei adressmässig voneinander verschiedene Speicherbereiche, ein Sicherungsspeicherbereich und ein Arbeitsspeicherbereich vorgesehen sein. Im unter Zugriff auf den Arbeitsspeicherbereich des zweiten Datenspeichers $M_2$ kann die zweite Recheneinheit eigene Aufgaben ausführen, solange die erste Recheneinheit fehlerfrei arbeitet.

Wie der Sicherungsspeicherbereich, so weist auch der Arbeitsspeicherbereich im zweiten Datenspeicher $M_2$ aus noch zu erläuternden Gründen vorzugsweise ebenfalls Paare von Speicherworten unter sämtlichen diesem Bereich zugehörigen Adressen adr auf. Für den Zugriff auf den Arbeitsspeicherbereich des zweiten Datenspeichers $M_2$ durch die zweite Recheneinheit ist dann allerdings ebenfalls die Unterstützung durch die Steuerlogik $CL_2$ erforderlich. Der Zugriff auf den Arbeitsspeicherbereich erfolgt vorzugsweise in gleicher Weise wie der bereits beschriebene Zugriff auf den Sicherungsspeicherbereich.

Damit die Steuerlogik $CL_2$ auch für den Arbeitsspeicherbereich im zweiten Datenspeicher $M_2$ jeweils das zusätzliche Adressbit $Z_2$ generieren kann sind in ihrem Kontrollbitspeicher $M_C$ auch für sämtliche Adressen adr des Arbeits speicherbereichs die Kontrollbits BIT1(adr), BIT2(adr) und BIT3(adr) vorzusehen. Wird der logische Zustand der Steuerleitung B bei einem Zugriff auf den Arbeitsspeicherbereich im zweiten Datenspeicher $M_2$ von der zweiten Logik $L_2$ so eingestellt, dass von der ersten Logik $L_1$ jeweils die Gleichsetzungsoperation ausgeführt wird, so ergeben sich keine Probleme durch die fortlaufende Invertierung des Steuerbits A, solange die erste Recheneinheit das mit den Recovery-Points versehene Programm ausführt. Denn wenn sich die logischen Zustände der Kontrollbits BIT1(adr) und BIT2(adr) entsprechen, wird unabhängig vom logischen Zustand des Steuerbits A innerhalb der Speicherwortpaare des zweiten Datenspeichers $M_2$ immer das gleiche Speicherwort durch das aus ihnen über das Zeigerbit OLD(adr) gebildete zusätzliche Adressbit $Z_2$ adressiert.

Durch die bidirektionale Ausbildung des Drei-Zustands-Treiber $T_{2.5}$ können Daten, wie beim Arbeitsspeicherbetrieb erforderlich, sowohl geschrieben als auch gelesen werden. Ob geschrieben oder gelesen werden soll, teilt die zweite Recheneinheit der zweiten Logik $L_2$ über Schreib/Lese-Steuerleitung $RW_2$ mit.

Bei dieser Ausführungsform der Erfindung kann der Sicherungsspeicherbereich des zweiten Datenspeichers $M_2$ nach einem Ausfall der ersten Recheneinheit und Uebernahme der Programmausführung durch die zweite Recheneinheit von dieser direkt als neuer Arbeitsspeicherbereich verwendet werden. Dadurch wird ein zeitaufwendiges Kopieren der gesicherten Daten überflüssig.

Das System aus erster Recheneinheit und erstem Datenspeicher $M_1$ ist vorzugsweise räumlich sowie galvanisch vom System aus zweiter Recheneinheit, zweitem Datenspeicher $M_2$ und Steuerlogik $CL_2$ getrennt angeordnet. Zur galvanischen Trennung der beiden Systeme ist die Datenverbindung $DL_1$ vorzugsweise als serieller optischer Datenkanal ausgebildet.

Damit kann sichergestellt werden, dass ein Fehler im erstgenannten der beiden Systeme, beispielsweise ein Kurzschluss oder ein Stromausfall, keinen Einfluss auf die Funktionsfähigkeit des zweitgenannten Systems hat. Durch Zwischenspeicherung der über die Datenverbindung $DL_1$ zu übertragenden Daten im Pufferspeicher $B_1$ der Sendeeinheit $S_1$ und Uebertragung der Daten mit relativ gleichmässiger Rate können die Anforderungen an die Bandbreite der Datenverbindung $DL_1$ erheblich reduziert werden.

Wie vorstehend ausführlich erläutert, muss von der Steuerlogik $CL_2$ in jedem Intervall zwischen zwei Recovery-Points für alle Adressen adr zumindest des Sicherungsspeicherbereichs des zweiten Datenspeichers $M_2$ aus Datenkonsistenzgründen die Gleichsetzungsoperation ausgeführt oder zumindest das Erfordernis ihrer Ausführung geprüft werden. Dies kann durch paralleles Ausführen der Gleichsetzungsoperationen für mehrere Adressen adr gleichzeitig zeitlich effizienter erfolgen.

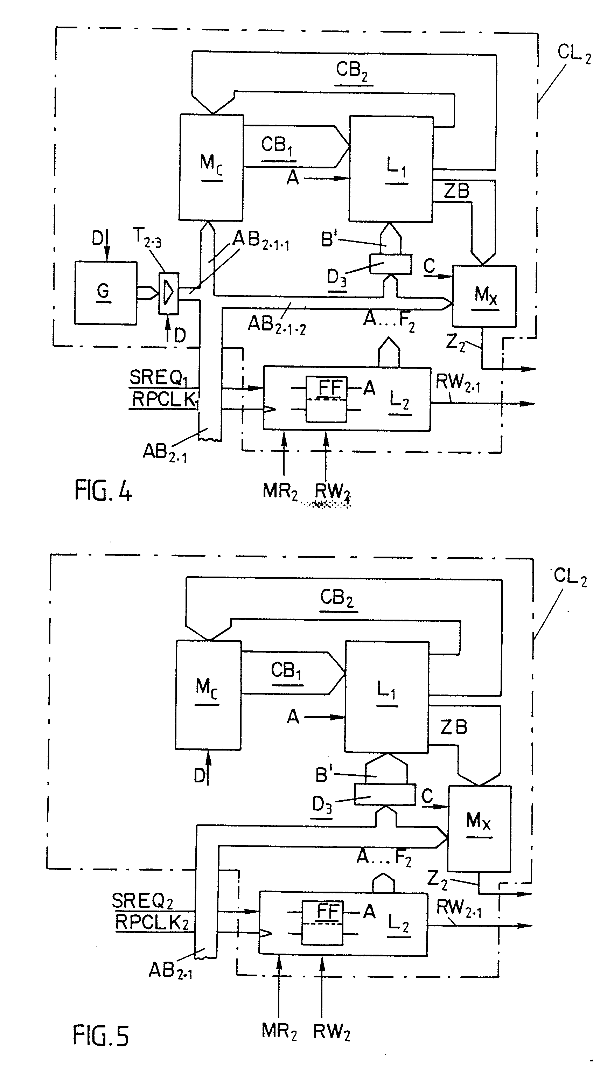

In Fig. 4 ist eine Ausführungsform der Steuerlogik $CL_2$ dargestellt, welche dies leistet. Die Steuerlogik von Fig. 4 ist im wesentlichen gleich aufgebaut wie die Steuerlogik von Fig. 1. Insbesondere stimmen alle in sie hineinführenden und aus ihr herausführenden Leitungen und Busse überein, so dass sie direkt in Fig. 1 an die Stelle der dort dargestellten Steuerlogik gesetzt werden könnte. Entsprechend der parallelen Verarbeitung von beispielsweise jeweils m der beispielsweise insgesamt n Adressen adr sind in der Steuerlogik von Fig. 4 die Kontrollbitbusse $CB_1$ und $CB_2$ auf m $\times$ 3 Bit verbreitert. Zur Adressierung des Kontrollbitspeichers $M_C$ dienen jetzt Gruppenadressen, welche aus einer Untermenge sämtlicher Adressbits der die Adressen adr bildenden Adressbits gebildet werden. Entsprechend sind, einen Adressbus $AB_{2.1.1}$ bildend, nur ein Teil der Adressleitungen des Adressbusses $AB_{2.1}$ dem Kontrollbitspeicher $M_C$ zugeführt. Auch der Adressgenerator G muss jetzt nur die Gruppenadressen generieren und ist daher entsprechend an den Adressbus $AB_{2.1.1}$ angeschlossen. Die erste Logik $L_1$ weist nunmehr m gleichartige Schaltkreise zur Verarbeitung von m Kontrollbit-Triplets auf. An Stelle der lediglich zwei Steuerleitungen OLD und NEW in der Steuerlogik nach Fig. 1 führen in der Steuerlogik nach Fig. 4 m OLD und m NEW Steuerleitungen von der ersten Logik $L_1$ zum Multiplexer $M_X$, welche den Zeigerbitbus ZB bilden.

Da die Datensicherungsoperation sowie die Zugriffe auf den zweiten Datenspeicher $M_2$ durch die zweite Recheneinheit nach wie vor für einzelne Adressen adr möglich sein muss, sind die nicht zur Bildung der Gruppenadresse benötigten Adressleitungen des Adressbusses $AB_{2.1}$, einen Adressbus $AB_{2.1.2}$ bildend, dem Multiplexer $M_X$ sowie einem Decodierer $D_3$ zugeführt. Der Decodierer $D_3$ bildet aus diesen Adressleitungen m Steuerleitungen B' für die erste Logik $L_1$, anhand welchen sie erkennt, von welchem ihrer m parallelen Schaltkreise die Datensicherungsoperation auszuführen ist. Von allen übrigen Schaltkreisen kann gleichzeitig die Gleichsetzungsoperation ausgeführt werden, allerdings mit Ausnahme von denjenigen auf den im laufenden Intervall bereits eine Datensicherungsoperation ausgeführt wurde. Am Multiplexer $M_X$ wird über die genannten Adressleitungen des Adressbusses $AB_{2.1.2}$ eine der m OLD bzw. m NEW Steuerleitungen selektiert.

Anstatt für eine lediglich teilweise parallele Ausführung der Gleichsetzungsoperationen für m Adressen adr kann die Steuerlogik $CL_2$ auch für eine vollständig parallele Ausführung der Gleichsetzungsoperationen ausgebildet sein.

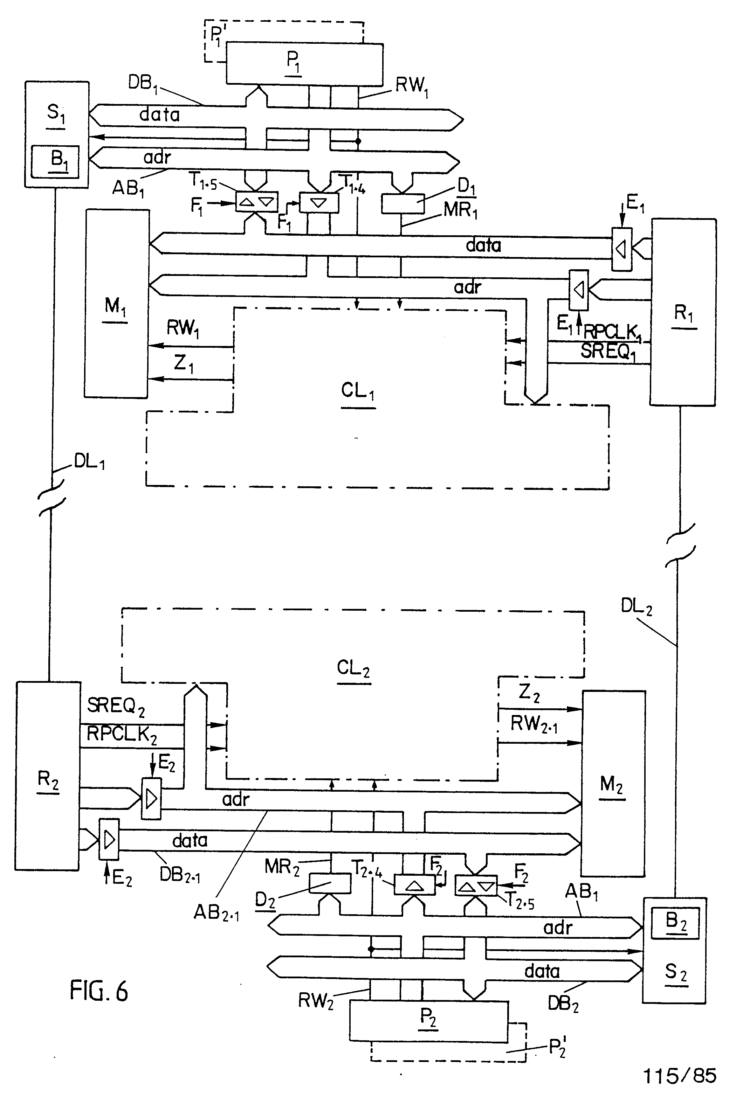

In Fig. 5 ist eine Ausführungsform der Steuerlogik $CL_2$ dargestellt, mit der eine solche vollständig parallele Ausführung aller Gleichsetzungsoperationen möglich ist. Die Steuerlogik $CL_2$ von Fig. 5 entspricht in ihrem Aufbau im wesentlichen der Steuerlogik $CL_2$ von Fig. 4, insbesondere auch hinsichtlich der in sie hineinführenden und aus ihr herausführenden Leitungen und Busse. Sie könnte ebenfalls die Steuerlogik $CL_2$ in Fig. 1 ersetzen. Die in Fig. 5 dargestellte Steuerlogik weist jedoch keinen Adressgenerator G mehr auf, weil dieser bei einer vollständig parallelen Ausführung der Gleichsetzungsoperationen für sämtliche Adressen adr überflüssig ist. Auch ist der Kontrollbitspeicher $M_C$ nicht länger an den Adressbus $AB_{2.1}$ angeschlossen. Er ist lediglich noch mit einer einzigen Steuerleitung beaufschlagt, z.B. mit der jetzt freigewordenen Steuerleitung D, die in den Steuerlogiken von Fig. 1 und Fig. 4 zur Steuerung des Adressgenerators G benötigt wurde. Auf ein entsprechendes Signal auf dieser Steuerleitung D hin werden sämtliche im Kontrollbitspeicher $M_C$ enthaltenen Kontrollbits parallel in die erste Logik $L_1$ überführt. Diese weist eine der Gesamtzahl n von möglichen Adressen adr entsprechende Anzahl paralleler Schaltkreise auf. Die Kontrollbitbusse $CB_1$ und $CB_2$ sowie der Zeigerbitbus ZB sind gegenüber den entsprechenden Bussen in der Steuerlogik von Fig. 1 n-fach verbreitert. Dem Multiplexer $M_X$ sowie dem Decodierer $D_3$ sind sämtliche Adressleitungen des Adressbusses $AB_{2.1}$ zugeführt. Der Decodierer $D_3$ bildet aus diesen Adressleitungen n Steuerleitungen B' für die erste Logik $L_1$. Am logischen Zustand dieser n Steuerleitungen B' kann die erste Logik $L_1$ wiederum erkennen, für welche der n Adressen adr die Datensicherungsoperation auszuführen ist. Am Multiplexer $M_X$ wird über die genannten Adressleitungen wieder eine der nunmehr n OLD bzw. n NEW Steuerleitungen selektiert.

Mit der in Fig. 5 dargestellten Steuerlogik können sämtliche erforderlichen Gleichsetzungsoperationen in einem einzigen Schritt, d.h. extrem schnell ausgeführt werden. Insbesondere kann dies unmittelbar nach dem Erreichen jedes Recovery-Points und vor Ausführung der ersten erforderlichen Datensicherungsoperation erfolgen. Diese Verfahrensweise hat den besonderen Vorteil, dass dadurch das dritte Kontrollbit BIT3-(adr) entfallen kann; denn dieses wurde, wie erläutert, in den Steuerlogiken von Fig. 1 und Fig. 4 ja nur deshalb benötigt, um die Ausführung von Gleichsetzungsoperationen für diejenigen Adressen adr zu verhindern, auf die im jeweils laufenden Intervall zur Datensicherung bereits zugegriffen wurde. Allerdings muss bei dieser Verfahrensweise sicher gestellt sein, dass bei einer Datensicherungsoperation für die von der Datensicherungsoperation nicht betroffenen parallelen Adressen die Gleichsetzungsoperation nicht nochmals ausgeführt wird. Der Kontrollbitspeicher $M_C$ braucht deshalb in der Steuerlogik von Fig. 5 lediglich für die Aufnahme der Kontrollbits BIT1(adr) und BIT2(adr) ausgelegt zu werden. Entsprechend vereinfacht sich der Schaltungsaufwand innerhalb der ersten Logik $L_1$, da kein Initialisierungsbit INI(adr) mehr gebildet und verarbeitet werden muss. Die Kontrollbitbusse $CB_1$ und $CB_2$ brauchen in der Steuerlogik von Fig. 4 lediglich n × zwei Bit breit zu sein.

Eine besonders elegante Lösung ergibt sich durch Integration der in Fig. 5 dargestellten Steuerlogik $CL_2$ in einem VLSI-Baustein (VLSI = Very-Large-Scale-Integration). Durch diese Massnahme lässt sich die Arbeitsgeschwindigkeit der Steuerlogik $CL_2$ nochmals steigern. Durch matrixförmige Anordnung von n Elementen aus je 2 Speicherzellen für BIT1 und BIT2 und aus der Logik $L_1$ wird der Aufwand für den Dekodierer $D_3$ und Multiplexer $M_X$ reduziert.

Im Rahmen der bisherigen Betrachtung wurde lediglich davon ausgegangen, dass die zweite Recheneinheit die Funktion der ersten Recheneinheit bei einem Ausfall desselben übernimmt. Gemäss einer vorteilhaften Weiterbildung der Erfindung kann jedoch umgekehrt auch die erste Recheneinheit zur Sicherung der zweiten Recheneinheit ausgebildet werden, so dass sich die beiden Systeme gegenseitig sichern. In Fig. 6 ist eine derart erweiterte fehlertolerante Mehrrechneranordnung dargestellt.

Es ist vollig symmetrisch aufgebaut. Der untere Teil von Fig. 6 entspricht vollig dem unteren Teil von Fig. 1, auch hinsichtlich der Bezugszeichen. Lediglich die Steuerlogik CL₂ ist hier in ihrem Aufbau nicht detailliert dargestellt. Auch die in den Fig. 4 und 5 dargestellten Steuerlogiken CL₂ könnten hier Verwendung finden. Der obere Teil von Fig. 6 ist ein Spiegelbild des unteren Teils. Allerdings sind hier zur besseren Unterscheidung sämtliche Bezugszeichen mit dem Index 1 versehen.

Fällt eine der beiden Recheneinheiten von Fig. 6 aus, so übernimmt die jeweils andere deren Aufgabe. Dabei greift sie auf die im Sicherungsspeicherbereich des ihr zugeordneten Datenspeichers enthaltenen gesicherten Daten zu und benutzt den Sicherungsspeicherbereich in der Folge weiter als neuen Arbeitsspeicherbereich. In dem symmetrischen Mehrrechnersystem von Fig. 6 kann nach Wiederherstellung der ausgefallenen Recheneinheit diese mit der Absicherung der anderen, nicht ausgefallenen betraut werden. Dabei kommt nunmehr auch die identische Ausbildung der Sicherungsspeicher-und Arbeitsspeicherbereiche in den Datenspeichern M₁, M₂ mit jeweils Paaren von Speicherworten in vorteilhafter Weise zur Anwendung. Denn dadurch kann der ursprünglich von der anderen, nicht ausgefallenen Recheneinheit als Arbeitsspeicherbereich verwendete Speicherbereich der ausgefallenen Recheneinheit nach ihrer Wiederherstellung als neuer Sicherungsspeicherbereich zur Verfügung gestellt werden. Eine Unterbrechung der Programmausführung ist bei Wiedereingliederung der ausgefallenen Recheneinheit nicht erforderlich.

Nach der Reintegration der ausgefallenen Recheneinheit auf die beschriebene Weise ist der alte Zustand wieder hergestellt, wenn das Program, das ursprünglich von der ersten Recheneinheit ausgeführt wurde, jetzt von der zweiten Recheneinheit bearbeitet wird und das ursprünglich von der zweiten Recheneinheit bearbeitete Programm jetzt von der ersten Recheneinheit ausgeführt wird. Auch die Arbeitsspeicher-und Sicherungsspeicherbereiche innerhalb der Datenspeicher M₁ und M₂ sind gegeneinander vertauscht.

Die in Fig. 6 dargestellte fehlertolerante Mehrrechneranordnung, mit zwei sich gegenseitig sichernden Systemen, kann selbstverständlich auch auf drei oder noch mehr, sich z.B. paarweise gegenseitig sichernde Systeme, erweitert werden.


**Ansprüche**

1. Fehlertolerante Mehrrechneranordnung

1.1 mit einer ersten Recheneinheit ($P_1$, $P_1'$), welche in Ausführung eines Recovery-Points enthaltenden Programms Schreibzugriffe auf Speicherworte eines ersten Datenspeichers ($M_1$) ausführt,

1.2 mit einem zweiten Datenspeicher ($M_2$), welcher zu jedem Speicherwort des ersten Datenspeichers ($M_1$), in das während der Programmausführung geschrieben wird, ein Paar von Speicherworten unter entsprechender Adresse adr, der Paaradresse, aufweist,

1.3 zu welchem zweiten Datenspeicher ($M_2$) bzw. einer diesem zugeordneten Steuerlogik ($CL_2$) sämtliche während der Programmausführung von der ersten Recheneinheit ($P_1$, $P_1'$) in den ersten Datenspeicher ($M_1$) geschriebenen Daten einschliesslich ihrer jeweiligen Adressen sowie ein jeweils das Erreichen eines Recovery-Points anzeigendes Recovery-Point-Signal übertragen werden,

1.4 in welchem zweiten Datenspeicher ($M_2$) die zu ihm übertragenen Daten unter der Kontrolle der Steuerlogik ($CL_2$) derart abgespeichert werden, dass im zweiten Datenspeicher ($M_2$) jeweils eine Sicherungskopie des Datenzustands des ersten Datenspeichers ($M_1$) am zuletzt von der ersten Recheneinheit ($P_1$, $P_1'$) bei der Programmausführung erreichten Recovery-Point enthalten ist und

1.5 mit einer zweiten Recheneinheit ($P_2$, $P_2'$), welche bei einem Fehler der ersten Recheneinheit ($P_1$, $P_1'$) die Ausführung des Programms am genannten Recovery-Point unter Verwendung des im zweiten Datenspeicher ($M_2$) gesicherten Datenzustands an diesem Recovery-Point übernimmt und fortführt, dadurch gekennzeichnet,

1.6 dass in der Steuerlogik ($CL_2$) ein Kontrollbitspeicher ($M_C$) vorgesehen ist, welcher zu jedem Paar von Speicherworten des zweiten Datenspeichers ($M_2$) mindestens ein erstes Kontrollbit BIT1(adr) und ein zweites Kontrollbit BIT2(adr) unter der gleichen Adresse adr aufweist,

1.7 dass in der Steuerlogik ($CL_2$) eine ein Steuerbit A enthaltende Ein-Bit-Speicherzelle (FF) vorgesehen ist, deren binärer Zustand von der Steuerlogik ($CL_2$) an jedem Recovery-Point auf das Recovery-Point-Signal hin invertiert wird,

1.8 dass bei jedem Schreibvorgang in den zweiten Datenspeicher ($M_2$) zur Sicherung von Daten die zu ihm von der ersten Recheneinheit ($P_1$, $P_1'$) übertragen werden, von der Steuerlogik ($CL_2$) zunächst ein erstes Zeigerbit OLD(adr) aus den aus dem Kontrollbitspeicher ($M_C$) ausgelesenen Kontrollbits BIT1(adr), BIT2(adr) sowie dem Steuerbit A nach der Vorschrift

$$\text{OLD(adr)} := \text{BIT1(adr)} . \overline{A} + \text{BIT2(adr)} . A$$

gebildet wird, ausserdem mit dazu inversem binärem Zustand ein zweites Zeigerbit NEW(adr) gebildet und dieses zur Vervollständigung der Paaradresse adr zur Speicherwortadresse des zweiten Datenspeichers - ($M_2$) einem Adresseingang des zweiten Datenspeichers zugeführt wird und dass, diesen Vorgang abschliessend, nach den Beziehungen

$$\text{BIT1(adr)} := \text{NEW(adr)} . A + \text{OLD(adr)} . \overline{A} \quad \text{und}$$
$$\text{BIT2(adr)} := \text{NEW(adr)} . \overline{A} + \text{OLD(adr)} . A$$

die binären Zustände der Kontrollbits BIT1(adr) und BIT2(adr) neu bestimmt und in den Kontrollbitspeicher - ($M_C$) eingeschrieben werden,

1.9 dass innerhalb jeden Intervalls zwischen zwei Recovery-Points von der Steuerlogik ($CL_2$) für alle Adressen adr von Paaren von Speicherworten, in die im jeweils laufenden Intervall noch nicht geschrieben wurde, das erste Zeigerbit OLD(adr), wie vorstehend beschrieben, gebildet, ausserdem wieder das zweite Zeigerbit NEW(adr), diesmal jedoch mit dem gleichen binären Zustand wie das erste Zeigerbit OLD(adr), gebildet und schliesslich, ebenfalls wie vorstehend beschrieben, aus den beiden Zeigerbits OLD(adr) und NEW(adr) die binären Zustände der Kontrollbits BIT1(adr) und BIT2(adr) neu bestimmt und in den Kontrollbitspeicher ($M_C$) eingeschrieben werden und

1.10 dass bei jedem Lesevorgang aus dem zweiten Datenspeicher ($M_2$), durch den die zweite Recheneinheit ($P_2$, $P_2'$) nach einem Fehler der ersten Recheneinheit ($P_1$, $P_1'$) Zugriff auf Daten nimmt, die zum gesicherten Datenzustand am genannten Recovery-Point gehören, von der Steuerlogik ($CL_2$) jeweils das erste Zeigerbit OLD (adr), wie vorstehend beschrieben, gebildet und zur Vervollständigung der Paaradresse adr zur Speicherwortadresse des zweiten Datenspeichers ($M_2$) dem genannten Adresseingang des zweiten Datenspeichers ($M_2$) zugeführt wird.

2. Fehlertolerante Mehrrechneranordnung nach Anspruch 1, dadurch gekennzeichnet, dass das Merkmal 1.9 von Anspruch 1 von der Steuerlogik ($CL_2$) in einer Schleife über alle Adressen adr ausgeführt wird, wobei die Adressen adr sukzessive von einem in der Steuerlogik ($CL_2$) enthaltenen Adressgenerator (G) erzeugt werden.

3. Fehlertolerante Mehrrechneranordnung nach Anspruch 1, dadurch gekennzeichnet, dass das Merkmal 1.9 von Anspruch 1 von der Steuerlogik ($CL_2$) in einer Schleife über Gruppen von jeweils m Adressen adr mit jeweils gemeinsamer Gruppenadresse ausgeführt wird, wobei die Gruppenadressen sukzessive von einem in der Steuerlogik ($CL_2$) enthaltenen Adressgenerator (G) erzeugt werden.

4. Fehlertolerante Mehrrechneranordnung nach einem der Ansprüche 2 oder 3, dadurch gekennzeichnet,

4.1 dass der Kontrollbitspeicher zu jedem Paar von Speicherworten des zweiten Datenspeichers ($M_2$) neben dem ersten und zweiten Kontrollbit BIT1(adr) und BIT2(adr) noch ein drittes Kontrollbit BIT3(adr) aufweist,

4.2 dass das dritte Kontrollbit BIT3(adr) von der Steuerlogik ($CL_2$) jeweils zusammen mit den ersten und zweiten Kontrollbits BIT1(adr) und BIT2(adr) aus dem Kontrollbitspeicher ($M_C$) ausgelesen und gemeinsam mit diesen nach Verarbeitung und gegebenenfalls Veränderung wieder in den Kontrollbitspeicher ($M_C$) eingeschrieben wird,

4.3 dass aus dem dritten Kontrollbit BIT3(adr) und dem Steuerbit A ein Initialisierungsbit INI(adr) nach der Vorschrift

$$\text{INI(adr)} := \text{BIT3(adr)} . \overline{A} + \overline{\text{BIT3(adr)}} . A$$

gebildet wird,

4.4 dass das Initialisierungsbit INI(adr) bei jeder Ausführung des Merkmals 1.8 von Anspruch 1 durch die Steuerlogik ($CL_2$) auf einen ersten binären Zustand, z.B. auf "1", gesetzt und anschliessend jeweils der binäre Zustand des dritten Kontrollbits BIT3(adr) nach der Vorschrift

$$\text{BIT3(adr)} := \text{INI(adr)} . \overline{A} + \overline{\text{INI(adr)}} . A$$

neu bestimmt und in den Kontrollbitspeicher ($M_C$) eingeschrieben wird,

4.5 dass bei der Ausführung des Merkmals 1.10 von Anspruch 1 in einer Schleife das Initialisierungsbit INI(adr) von der Steuerlogik ($CL_2$) zur Erkennung derjenigen Adressen adr von Paaren von Speicherwerten verwendet wird, in die im jeweils laufenden Interall bereits geschrieben wurde und

4.6 dass bei der Ausführung des Merkmals 1.9 von Anspruch 1 in einer Schleife das Initialisierungsbit INI(adr) jeweils auf den ersten binären Zustand gesetzt und anschliessend jeweils der binäre Zustand des dritten Kontrollbits BIT3(adr) wie beschrieben neu bestimmt und in den Kontrollbitspeicher ($M_C$) eingeschrieben wird.

5. Fehlertolerante Mehrrechneranordnung nach Anspruch 1, dadurch gekennzeichnet, dass das Merkmal 1.9 von Anspruch 1 von der Steuerlogik ($CL_2$) für alle Adressen adr unmittelbar nach Erreichen jedes Recovery-Points vor einer erneuten Ausführung des Merkmals 1.8 von Anspruch 1 parallel ausgeführt wird.

6. Fehlertolerante Mehrrechneranordnung nach einem der Ansprüche 1 bis 5, dadurch gekennzeichnet, dass die Ein-Bit-Speicherzelle (FF) ein Flip-Flop ist.

7. Fehlertolerante Mehrrechneranordnung nach einem der Ansprüche 1 bis 6, dadurch gekennzeichnet, dass der Kontrollbitspeicher ($M_C$) im Vergleich zum zweiten Datenspeicher ($M_2$) ein schnellerer Speicher ist.

8. Fehlertolerante Mehrrechneranordnung nach einem der Ansprüche 1 bis 7, dadurch gekennzeichnet, dass die Steuereinheit ($CL_2$) in einem VLSI-Baustein integriert ist.

9. Fehlertolerante Mehrrechneranordnung nach einem der Ansprüche 1 bis 8, dadurch gekennzeichnet, dass das System aus erster Recheneinheit ($P_1$, $P_1'$ ) und erstem Datenspeicher ($M_1$) räumlich und galvanisch vom System aus zweiter Recheneinheit ($P_2$, $P_2'$ ), zweitem Datenspeicher ($M_2$) und der Steuerlogik - ($CL_2$) getrennt angeordnet ist und dass zwischen den beiden genannten Systemen eine Datenverbindung - ($DL_1$) mit einer Sendeeinrichtung ($S_1$) auf der Seite des erstgenannten Systems und einer Empfangseinrichtung ($R_2$) auf der Seite des zweitgenannten Systems installiert ist.

10. Fehlertolerante Mehrrechneranordnung nach Anspruch 9, dadurch gekennzeichnet, dass die Datenverbindung ($DL_1$) als optischer, serieller Datenkanal ausgeführt ist.

11. Fehlertolerante Mehrrechneranordnung nach einem der Ansprüche 9 oder 10, dadurch gekennzeichnet, dass in der Datenverbindung ($DL_1$), vorzugsweise auf der Seite des erstgenannten Systems, vor oder als Teil der Sendeeinrichtung ($S_1$) ein Pufferspeicher ($B_1$) vorgesehen

12. Fehlertolerante Mehrrechneranordnung nach einem der Ansprüche 1 bis 11, dadurch gekennzeichnet, dass der zweite Datenspeicher ($M_2$) zwei Speicherbereiche mit jeweils Paaren von Speicherworten aufweist, wobei einer der Speicherbereiche als Sicherungsspeicherbereich zur Sicherung des Datenzustandes des ersten Datenspeichers ($M_1$) an den Recovery-Points und der andere Speicherbereich der zweiten Recheneinheit ($P_2$, $P_2'$ ) als Arbeitsspeicherbereich dient, wobei von der Steuereinheit ($CL_2$) zur Vervollständigung der Paaradresse adr zur Speicherwortadresse bei allen Speicherzugriffen auf den Arbeitsspeicherbereich jeweils ein sich zeitlich nicht veränderndes Zeigerbit dem genannten Adresseingang des zweiten Datenspeichers ($M_2$) zugeführt ist.

13. Fehlertolerante Mehrrechneranordnung nach Anspruch 12, dadurch gekennzeichnet, dass auch der erste Datenspeicher ($M_1$) zwei Speicherbereiche mit jeweils Paaren von Speicherworten aufweist, wobei einer der Speicherbereiche der ersten Recheneinheit ($P_1$, $P_1'$ ) als Arbeitsspeicherbereich und der andere Speicherbereich als Sicherungsspeicherbereich zur Sicherung des Datenzustandes des Arbeitsspeicherbereichs des zweiten ($M_2$) oder eines weiteren Datenspeichers an Recovery-Points in einem von der zweiten - ($P_2$, $P_2'$ ) oder einer weiteren Recheneinheit ausgeführten Programm dient, dass auch dem ersten Datenspeicher ($M_1$) eine Steuereinheit ($CL_1$) zugeordnet ist, welche in Funktion und Aufbau der dem zweiten Datenspeicher ($M_2$) zugeordneten Steuereinheit ($CL_2$) entspricht und dass zwischen den Systemen aus Recheneinheit ($P_1$, $P_1'$ , $P_2$, $P_2'$ ), Datenspeicher ($M_1$, $M_2$) und zugeordneter Steuereinheit ($CL_1$, $CL_2$) jeweils mindestens eine Datenverbindung ($DL_1$, $DL_2$) für die Datenübertragung zwischen den Datenspeichern ($M_1$, $M_2$) installiert ist.

14. Fehlertolerante Mehrrechneranordnung nach Anspruch 13, dadurch gekennzeichnet, dass nach einem Fehler der ersten Recheneinheit ($P_1$, $P_1'$ ) der vor Auftreten des Fehlers als Sicherungsspeicherbereich im zweiten Datenspeicher ($M_2$) dienende Speicherbereich von der zweiten Recheneinheit ($P_2$, $P_2'$ ) nach Uebernahme und Fortführung der Programmausführung als Arbeitsspeicherbereich verwendet wird.

FIG. 1

0 228 559

115/85

0 228 559

RP$_{i-2}$

(OLD)
BIT 1

I

II

BIT 2

a)

(OLD)
BIT1

RP$_{i-1}$

I

III

BIT2

b)

BIT 1

I

III

BIT 2
(OLD)

c)

FIG. 2

RP$_i$

BIT 1

I

III

BIT 2
(OLD)

d)

(OLD)
BIT 1

I

III

BIT 2

e)

RP$_{i-1}$

BIT 1

I

III

BIT 2
(OLD)

a)

BIT 1

IV

III

BIT 2
(OLD)

b)

BIT 1

IV

III

BIT 2
(OLD)

c)

RP$_i$

(OLD)
BIT 1

IV

III

BIT 2

d)

FIG. 3

FIG. 4

FIG. 5

115/85

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 163 096 (BBC AG)<br>* Seite 5, Zeilen 1-25; Ansprüche 1,6 *<br><br>--- | 1-14 | G 06 F 11/14 |
| A | FR-A-2 344 893 (ICL.)<br>* Seiten 1-3, Zeile 15 *<br><br>--- | 1-14 | |
| A | PROCEEDINGS OF THE FALL JOINT COMPUTER CONFERENCE, 18.-20. November 1969, Seiten 347-357, Las Vegas, AFIPS, Montvale, US; E.J. DIETERICH et al.: "A compatible airborne multiprocessor"<br>* Seite 353, linke Spalte, letzter Absatz - Seite 354, Zeile 17 *<br><br>--- | 1-14 | |
| A | IBM TECHNICAL DISCLOSURE BULLETIN, Band 13, Nr. 6, November 1970, Seiten 1585-1586, New York, US; S.B. WEXLER: "Checkpoint updating"<br>* Das ganze Dokument" *<br><br>--- | 1-14 | RECHERCHIERTE SACHGEBIETE (Int. Cl.4)<br><br>G 06 F 11/14 |
| A | FR-A-2 492 132 (NIPPON ELECTRIC CO.)<br>* Seite 2, Zeile 27 - Seite 4, Zeile 7 *<br><br>----- | 1-14 | |

Der vorliegende Recherchenbericht wurde für alle Patentansprüche erstellt.

| Recherchenort | Abschlußdatum der Recherche | Prüfer |
|---|---|---|
| DEN HAAG | 23-03-1987 | QUESSON C.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument